# EUROPEAN PATENT SPECIFICATION

(11) **EP 3 828 244 B1**
(45) Date of publication and mention of the grant of the patent: **27.09.2023**
(21) Application number: 19841439.3
(22) Date of filing: 17.07.2019
(51) Int. Cl.: C09J 183/07, C08F 290/06, C09J 11/04, C09J 11/06, C09J 183/04

(54) **ULTRAVIOLET-CURABLE PRESSURE-SENSITIVE SILICONE ADHESIVE COMPOSITION AND CURED OBJECT OBTAINED THEREFROM**
UV-HÄRTBARE SILIKONHAFTKLEBERZUSAMMENSETZUNG UND DARAUS ERHALTENER GEHÄRTETER GEGENSTAND
COMPOSITION ADHÉSIVE DE SILICONE AUTOCOLLANTE, DURCISSABLE AUX ULTRAVIOLETS, ET OBJET DURCI OBTENU À PARTIR DE CELLE-CI

(30) Priority: 25.07.2018 JP 2018139399; 15.11.2018 JP 2018214361
(43) Date of publication of application: 02.06.2021
(73) Proprietor: SHIN-ETSU CHEMICAL CO., LTD., Tokyo 100-0004 (JP)
(72) Inventor: OTAKE, Kohei, Annaka-shi, Gunma 379-0224 (JP); KITAGAWA, Taichi, Annaka-shi, Gunma 379-0224 (JP); MATSUMOTO, Nobuaki, Annaka-shi, Gunma 379-0224 (JP); OZAI, Toshiyuki, Annaka-shi, Gunma 379-0224 (JP); OGAWA, Yoshinori, Tokyo 100-0004 (JP)
(74) Representative: Mewburn Ellis LLP
(86) International application number: PCT/JP2019/028076
(87) International publication number: WO 2020/022140

(56) References cited:
- WO-A1-2018/225430
- WO-A1-2019/065398
- JP-A- 2002 212 520
- JP-A- 2008 031 307
- JP-A- 2010 132 755
- JP-A- 2012 144 704
- JP-A- 2016 156 004
- US-A1- 2013 220 533

## Description

### TECHNICAL FIELD

The present invention relates to an ultraviolet-curable silicone pressure-sensitive adhesive composition and to a cured product thereof. More specifically, the invention relates to an ultraviolet-curable silicone pressure-sensitive adhesive composition and a cured product thereof which can be suitably used as a temporary bonding material for transferring objects.

### BACKGROUND ART

In recent years, there has been a desire not only for higher performance but also, at the same time, greater space and energy savings in electronics equipment such as smart phones, liquid-crystal displays and in-car components. In response to such societal demands, the electrical and electronic components built into such equipment are also being downsized and miniaturized, so that with each passing year assembly operations have become more complicated and difficult to carry out.

A technology capable of selectively transferring at one time such miniaturized devices and components has recently been developed and is attracting attention (Non-Patent Document 1).

This technology, called micro-transfer printing, uses the adhesive force of an elastomer to collectively pick up micro-components and transfer them to a desired location having a higher adhesive force.

An adhesive article obtained by spin coating, screen printing or otherwise applying a silicone pressure-sensitive adhesive composition onto a substrate or the like and then curing the composition is used as the micro-transfer printing material.

Silicone elastomers are known as adhesive materials used in this application. Many heat-curable, solvent-free, silicone-based pressure-sensitive adhesives have been described (Patent Documents 1 to 3).

However, when a heat-curable, solvent-free, silicone-based pressure-sensitive adhesive is used, after heat curing, the cured product ends up shrinking when it cools down to room temperature which leads to larger dimensional errors in the coating pattern.

Also, these pressure-sensitive adhesives have been developed for use in adhesive tape and lack sufficient elastic modulus for use as micro-transfer printing materials. When the elastic modulus is low, the micro-transfer printing material readily deforms, giving rise to misalignment during transfer and making it impossible to precisely transfer objects such as microscale devices to predetermined positions.

Silicone resins that can be cured in a short time at room temperature by irradiation with ultraviolet light, and have excellent dimensional accuracy, have also been developed (Patent Document 4), but the elastic modulus is not sufficiently high.

US 2013/220533 A1 discloses pressure sensitive adhesive compositions used in transfer films in semiconductor manufacture, comprising an adhesive component, typically an alkyl (meth)acrylate polymer, a photoinitiator and a silicone diacrylate component, which is crosslinkable with the adhesive component.

Accordingly, there exists a desire for an ultraviolet-curable pressure-sensitive adhesive silicone material which, in addition to being curable in a short time at room temperature by irradiation with ultraviolet light, also has a sufficient adhesive force and elastic modulus.

### PRIOR ART DOCUMENTS

### Patent Documents

Patent Document 1: JP No. 5825738
Patent Document 2: JP No. 2631098
Patent Document 3: JP No. 5234064
Patent Document 4: JP No. 4100882

### Non-Patent Documents

Non-Patent Document 1: John A. Rogers, "Transfer printing by kinetic control of adhesion to an elastomeric stamp," Nature Materials, Nature Publishing Group, Dec. 11, 2005, Vol. 6, pp. 33-38.

### SUMMARY OF THE INVENTION

### Technical Problem

In view of the above circumstances, an object of this invention is to provide an ultraviolet-curable silicone pressure-sensitive adhesive composition which gives a cured product of excellent adhesion and elastic modulus as a temporary bonding material. Another object is to provide a cured product of the ultraviolet-curable silicone pressure-sensitive adhesive composition.

### Solution to the Problem

The inventors have conducted investigations aimed at achieving these objects, as a result of which they have found that by using an organopolysiloxane having specific (meth)acryloyloxy-containing groups, a monofunctional (meth)acrylate compound having no siloxane structure, a specific organopolysiloxane resin and an organopolysiloxane resin having a specific (meth)acryloyloxy-containing group, there can be obtained an ultraviolet-curable silicone composition that cures rapidly when irradiated with ultraviolet light to give a cured product of good adhesion and elastic modulus. This discovery ultimately led to the present invention.

Accordingly, the present invention provides
1. An ultraviolet-curable silicone pressure-sensitive adhesive composition which includes:
   (A) 100 parts by weight of an organopolysiloxane having two groups of general formula (1) below per molecule 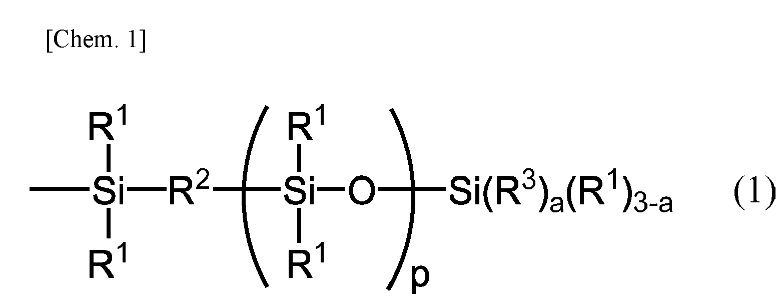 (wherein each R¹ is independently a monovalent hydrocarbon group of 1 to 20 carbon atoms; R² is an oxygen atom or an alkylene group of 1 to 20 carbon atoms; each R³ is independently an acryloyloxyalkyl, methacryloyloxyalkyl, acryloyloxyalkyloxy or methacryloyloxyalkyloxy group; p is a number that satisfies the condition 0 ≤ p ≤ 10; and a is a number that satisfies the condition 1 ≤ a ≤ 3),
   (B) from 1 to 200 parts by weight of a monofunctional (meth)acrylate compound having no siloxane structure,
   (C) from 1 to 1,000 parts by weight of an organopolysiloxane resin consisting of (a) R⁴₃SiO_{1/2} units (wherein each R⁴ is independently a monovalent hydrocarbon group of 1 to 10 carbon atoms) and (b) SiO_{4/2} units in a molar ratio of (a) units to (b) units within the range of 0.4:1 to 1.2:1,
   (D) from 1 to 200 parts by weight of an organopolysiloxane resin consisting of (c) units of general formula (2) below
      [Chem. 2] 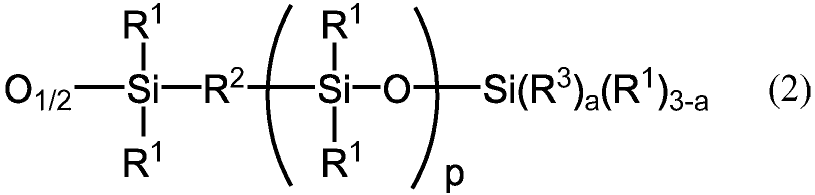 (wherein R¹, R², R³, a and p are as defined above), (d) R⁴₃SiO_{1/2} units (wherein R⁴ is as defined above) and (e) SiO_{4/2} units in a molar ratio of (c) units and (d) units combined to (e) units within the range of 0.4:1 to 1.2:1, and
   (E) from 0.01 to 20 parts by weight of a photopolymerization initiator;
2. The ultraviolet-curable silicone pressure-sensitive adhesive composition of 1 above, which further includes (F) from 1 to 200 parts by weight of finely powdered silica per 100 parts by weight of component (A);
3. A cured product of the ultraviolet-curable silicone pressure-sensitive adhesive composition of 1 or 2 above;
4. The cured product of 3 above which has a storage modulus at 25°C and a frequency of 1 Hz which is at least 3 MPa;
5. A pressure-sensitive adhesive which includes the cured product of 3 or 4 above;
6. An adhesive sheet which includes the cured product of 4 above;
7. A microstructure transfer stamp which includes the cured product of 4 above;
8. The microstructure transfer stamp of 7 above which has at least one raised structure;
9. A microstructure transfer apparatus which includes the microstructure transfer stamp of 7 or 8 above;
10. A microstructure-holding substrate which includes a pressure-sensitive adhesive layer made of the cured product of 4 above; and
11. A microstructure transfer apparatus which includes a microstructure-holding substrate of 10 above.

### ADVANTAGEOUS EFFECTS OF THE INVENTION

The ultraviolet-curable silicone rubber pressure-sensitive adhesive composition of the invention has good curability when irradiated with ultraviolet light, and the resulting cured product has excellent adhesion and elastic modulus as a temporary bonding material.

### BRIEF DESCRIPTION OF THE DRAWINGS

FIG. 1 is a schematic diagram showing an embodiment of a microstructure transfer stamp of the invention.
FIG. 2 is a schematic diagram showing another embodiment of a microstructure transfer stamp of the invention.
FIG. 3 is a schematic diagram showing an example of a method for producing a microstructure transfer stamp of the invention.

### DESCRIPTION OF EMBODIMENTS

The invention is described in detail below.

The ultraviolet-curable silicone pressure-sensitive adhesive composition of the invention includes (A) 100 parts by weight of an organopolysiloxane having two groups of general formula (1) below per molecule;
(B) from 1 to 200 parts by weight of a monofunctional (meth)acrylate compound having no siloxane structure;
(C) from 1 to 1,000 parts by weight of an organopolysiloxane resin made up of (a) R⁴₃SiO_{1/2} units (wherein R⁴ represents a monovalent hydrocarbon group of 1 to 10 carbon atoms) and (b) SiO_{4/2} units in a molar ratio of (a) units to (b) units within the range of 0.4:1 to 1.2:1;
(D) from 1 to 200 parts by weight of an organopolysiloxane resin made up of (c) units of general formula (2) below, (d) R⁴₃SiO_{1/2} units (wherein R⁴ is as defined above) and (e) SiO_{4/2} units in a molar ratio of (c) units and (d) units combined to (e) units within the range of 0.4:1 to 1.2:1; and
(E) from 0.01 to 20 parts by weight of a photopolymerization initiator.

### (A) Organopolysiloxane

Component (A) used in the invention serves as a crosslinking ingredient in this composition. It is an organopolysiloxane which has two groups of general formula (1) below per molecule and in which the backbone is substantially composed of repeating diorganosiloxane units.

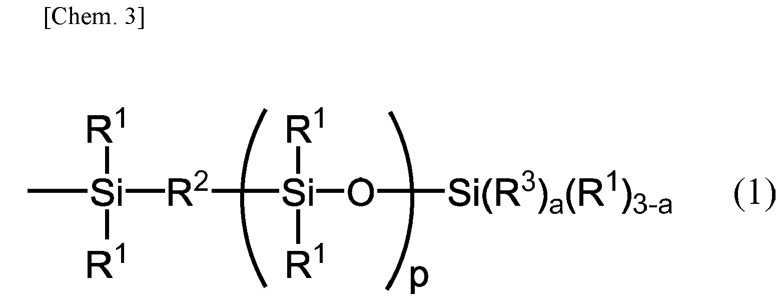

In formula (1), each R¹ is independently a monovalent hydrocarbon group of 1 to 20 carbon atoms, and is preferably a monovalent hydrocarbon group of 1 to 10 carbon atoms, and more preferably 1 to 8 carbon atoms, other than an aliphatic unsaturated group. R² is an oxygen atom or an alkylene group of 1 to 20 carbon atoms, preferably 1 to 10 carbon atoms, and more preferably 1 to 5 carbon atoms. Each R³ is independently an acryloyloxyalkyl, methacryloyloxyalkyl, acryloyloxyalkyloxy or methacryloyloxyalkyloxy group. Also, p is a number that satisfies the condition 0 ≤ p ≤ 10, and a is a number that satisfies the condition 1 ≤ a ≤ 3.

In formula (1), the monovalent hydrocarbon groups of 1 to 20 carbon atoms serving as the R¹ groups may be linear, branched or cyclic. Specific examples include alkyl groups such as methyl, ethyl, n-propyl, isopropyl, n-butyl, isobutyl, tert-butyl, n-hexyl, cyclohexyl, n-octyl, 2-ethylhexyl and n-decyl groups; alkenyl groups such as vinyl, allyl (2-propenyl), 1-propenyl, isopropenyl and butenyl groups; aryl groups such as phenyl, tolyl, xylyl and naphthyl groups; and aralkyl groups such as benzyl, phenylethyl and phenylpropyl groups.

Some or all of the hydrogen atoms bonded to carbon atoms on these monovalent hydrocarbon groups may be replaced with other substituents, specific examples of which include halogen-substituted hydrocarbon groups and cyano-substituted hydrocarbon groups such as chloromethyl, bromoethyl, trifluoropropyl and cyanoethyl groups.

Of these, R¹ is preferably an alkyl group of 1 to 5 carbon atoms or a phenyl group; and is more preferably a methyl, ethyl or phenyl group.

The alkylene group of 1 to 20 carbon atoms serving as the R² group may be linear, branched or cyclic. Specific examples include methylene, ethylene, propylene, trimethylene, tetramethylene, isobutylene, pentamethylene, hexamethylene, heptamethylene, octamethylene, nonamethylene and decylene groups.

Of these, R² is preferably an oxygen atom or a methylene, ethylene or trimethylene group. An oxygen atom or an ethylene group is more preferred.

The number of carbons in the alkyl (alkylene) group within the acryloyloxyalkyl, methacryloyloxyalkyl, acryloyloxyalkyloxy or methacryloyloxyalkyloxy groups serving as the R³ groups, although not particularly limited, is preferably from 1 to 10, and more preferably from 1 to 5. Specific examples of these alkyl groups include those, among the groups mentioned above as examples of R¹, which have from 1 to 10 carbon atoms.

Specific examples of R³ include, but are not limited to, those of the following formulae. 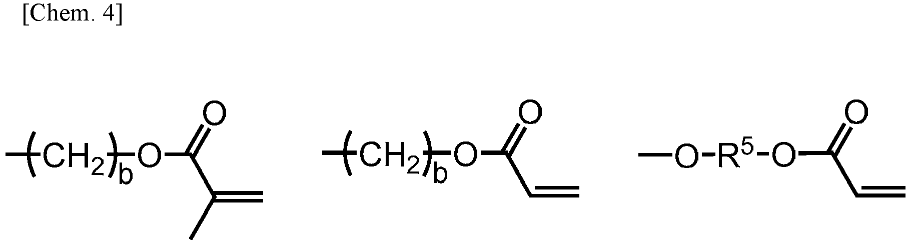 (wherein b is a number which satisfies the condition 1 ≤ b ≤ 4, and R⁵ is an alkylene group of 1 to 10 carbon atoms)

The subscript p is a number that satisfies the condition 0 ≤ p ≤ 10, and is preferably 0 or 1. The subscript a is a number that satisfies the condition 1 ≤ a ≤ 3, and is preferably 1 or 2.

The bonding positions of the groups of above general formula (1) in the organopolysiloxane molecule serving as component (A) used in the invention may be the ends of the molecular chain or non-ends of the molecular chain (i.e. partway along the molecular chain or side chains on the molecular chain), or may be both, although the presence of these groups only at the ends is desirable from the standpoint of flexibility.

In the organopolysiloxane molecule of component (A), organic groups bonded to silicon atoms other than in the groups of above general formula (1) are exemplified by the same groups as R¹ above. In particular, monovalent hydrocarbon groups of 1 to 12 carbon atoms, especially 1 to 10 carbon atoms, other than aliphatic unsaturated groups are preferred.

Specific examples include groups similar to those mentioned above as examples of R¹. However, from the standpoint of ease of synthesis, an alkyl, aryl or halogenated alkyl group is preferred, with a methyl, phenyl or trifluoropropyl group being more preferred.

The molecular structure of component (A) is basically a linear or branched chain-like structure (including linear structures in which a portion of the backbone has branches) wherein the backbone is made up of repeating diorganosiloxane units. A linear diorganopolysiloxane in which both ends of the molecular chain are capped with groups of general formula (1) above is preferred.

Component (A) may be a single polymer having these molecular structures, a copolymer made up of these molecular structures, or a mixture of two or more of these polymers.

The organopolysiloxane of component (A) has a viscosity at 25°C which, from the standpoint of further enhancing the workability of the composition and the mechanical properties of the cured product thereof, is preferably from 10 to 100,000 mPa s, and more preferably from 10 to 50,000 mPa s. This viscosity range is generally, in the case of a linear organopolysiloxane, one that corresponds to a number-average degree of polymerization of from about 10 to about 2,000, and preferably from about 50 to about 1,100. In this invention, the viscosity can be measured with a rotational viscometer (e.g. a BL, BH, BS or cone/plate-type viscometer or a rheometer) (the same applies below).

The degree of polymerization (or the molecular weight) can be determined as the polystyrene-equivalent number-average degree of polymerization (or number-average molecular weight) in gel permeation chromatography (GPC) using toluene or the like as the developing solvent (the same applies below).

Specific examples of the organopolysiloxane of component (A) include, but are not limited to, those of formulae (3) to (5) below 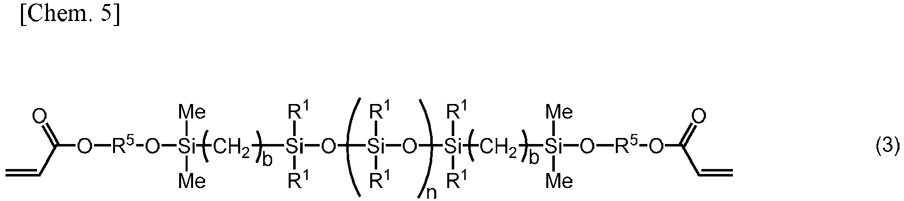 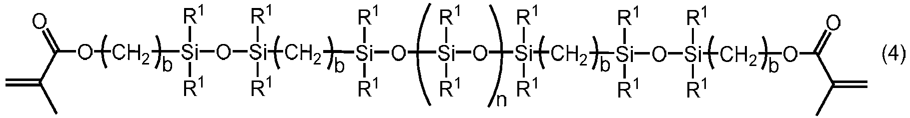 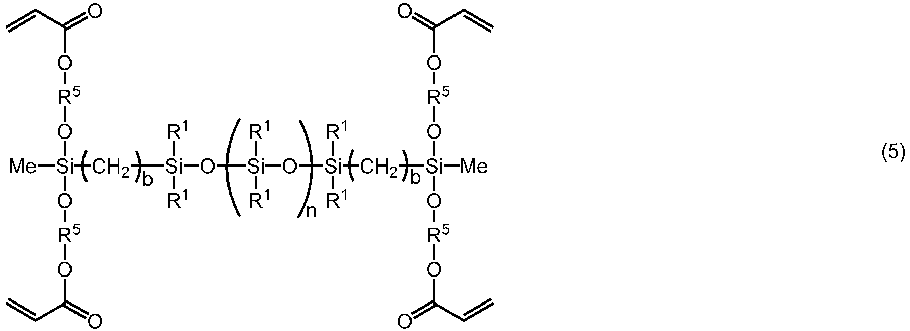 (wherein R¹, R⁵ and b are as defined above, Me stands for a methyl group, and n is a number that sets the viscosity of the organopolysiloxane to the above-indicated value, preferably from 1 to 800, and more preferably from 50 to 600).

Such organopolysiloxanes may be prepared by known methods. For example, polysiloxane of above formula (3) can be obtained by reacting 2-hydroxyethyl acrylate with the product of a hydrosilylation reaction between a dimethylsiloxane/diphenylsiloxane copolymer capped at both ends with dimethylvinylsiloxy groups and chlorodimethylsilane.

Organopolysiloxane of formula (4) can be obtained as the product of a hydrosilylation reaction between a dimethylsiloxane/diphenylsiloxane copolymer capped at both ends with dimethylvinylsiloxy groups and 3-(1,1,3,3-tetramethyldisiloxanyl)propyl methacrylate (CAS No. 96474-12-3).

Organopolysiloxane of formula (5) above can be obtained by reacting 2-hydroxyethyl acrylate with the product of a hydrosilylation reaction between a dimethylsiloxane/diphenylsiloxane copolymer capped at both ends with dimethylvinylsiloxy groups and dichloromethylsilane.

### (B) Monofunctional (Meth)Acrylate Compound having no siloxane structure

Specific examples of (B), the monofunctional (meth)acrylate compound having no siloxane structure, include isoamyl acrylate, lauryl acrylate, stearyl acrylate, ethoxy diethylene glycol acrylate, methoxy triethylene glycol acrylate, 2-ethylhexyl diglycol acrylate, phenoxy ethyl acrylate, phenoxy diethylene glycol acrylate, tetrahydrofurfuryl acrylate and isobornyl acrylate. These may be used singly, or two or more may be mixed together and used.

Of these, isobornyl acrylate is especially preferred.

In the invention, the monofunctional (meth)acrylate compound serving as component (B) is added in an amount, per 100 parts by weight of component (A), within the range of 1 to 200 parts by weight. When the amount of component (B) added is less than 1 part by weight per 100 parts by weight of component (A), the curability of the composition and the strength and adhesion of the cured product are inadequate. The viscosity of the overall composition can be adjusted by increasing the amount of component (B) added, but when the amount of addition exceeds 200 parts by weight per 100 parts by weight of component (A), the desired adhesion cannot be obtained.

In particular, the amount of component (B) added is preferably from 5 to 100 parts by weight per 100 parts by weight of component (A).

### (C) Organopolysiloxane Resin

Component (C), which is a component that imparts adhesion to the cured product, is organopolysiloxane resin consisting of (a) R⁴₃SiO_{1/2} units (wherein each R⁴ is independently a monovalent hydrocarbon group of 1 to 10 carbon atoms) and (b) SiO_{4/2} units, in a molar ratio of (a) units to (b) units within the range of 0.4:1 to 1.2:1.

Specific examples of the monovalent hydrocarbon group of 1 to 10 carbon atoms represented by R⁴ include, of the groups mentioned as examples in connection with R¹ above, those having from 1 to 10 carbon atoms, among which the following are preferred: alkyl groups of 2 to 6 carbon atoms, such as methyl, ethyl, n-propyl and n-butyl groups; aryl groups of 6 to 10 carbon atoms such as phenyl and tolyl groups; aralkyl groups of 7 to 10 carbon atoms such as the benzyl group; and alkenyl groups of 2 to 6 carbon atoms such as vinyl, allyl and butenyl groups.

Moreover, as with the R¹ groups, some or all of the hydrogen atoms bonded to carbon atoms on the monovalent hydrocarbon groups of R⁴ above may be replaced with the other substituents mentioned above.

In component (C) of the invention, the molar ratio of (a) R⁴₃SiO_{1/2} units (M units) and (b) SiO_{4/2} units (Q units), expressed as M units : Q units, is from 0.4:1 to 1.2:1. At a molar ratio of M units below 0.4, the adhesive force of the cured product decreases; at more than 1.2, the adhesive force and the rubber properties of the cured product decrease.

In order to set the adhesive force and the mechanical properties of the cured product within suitable ranges, the molar ratio of M units and Q units is preferably such that M units : Q units is from 0.6: 1 to 1.2:1.

The organopolysiloxane resin of component (C) is added in an amount, per 100 parts by weight of component (A), within the range of 1 to 1,000 parts by weight, preferably 10 to 800 parts by weight, and more preferably 20 to 500 parts by weight.

### (D) Organopolysiloxane Resin

Component (D), which is one crosslinking ingredient of the present composition, is a (meth)acryloyloxy-containing group-containing organopolysiloxane resin consisting of (c) units of general formula (2) below (M^{A} units), (d) R⁴₃SiO_{1/2} units (M units) and (e) SiO_{4/2} units (Q units). R⁴ is as defined above. 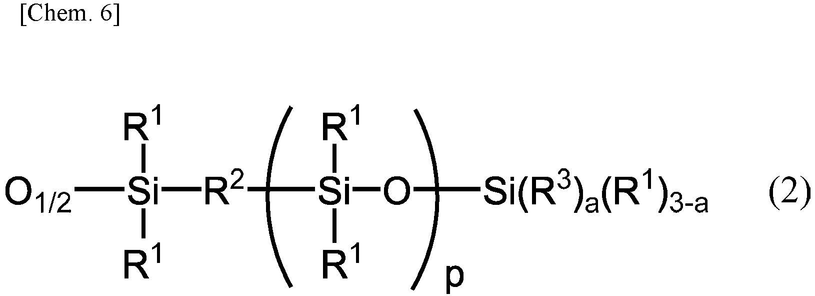 In formula (2), R¹, R², R³, a and p are as defined above.

In component (D) of the invention, the molar ratio of (c) units of general formula (2) above (M^{A} units), (d) R⁴₃SiO_{1/2} units (M units) and (e) SiO_{4/2} units (Q units), expressed as (M^{A} units + M units) : Q units, is from 0.4:1 to 1.2:1. When the molar ratio of M^{A} units + M units is less than 0.4, the viscosity of the composition may become very high; when it exceeds 1.2, the mechanical properties of the cured product may decrease.

In order to set the viscosity of the composition and the mechanical properties of the cured product in more suitable ranges, the molar ratio between M^{A} units + M units and Q units is preferably (M^{A} units + M units) : Q units = 0.6:1 to 1.2:1.

The rubber properties of the cured product can be adjusted by way of the molar ratio of M^{A} units and M units. When there are too many M^{A} units, the material may become brittle; when there are too few M^{A} units, the strength of the material may decrease. Therefore, taking these facts into account, it is preferable for the molar ratio M^{A} units : M units to be from 0.01:1 to 1:1, and more preferable for the molar ratio M^{A} units : M units to be from 0.05:1 to 0.5:1.

The organopolysiloxane resin serving as component (D) is added in an amount per 100 parts by weight of component (A) which is in the range of 1 to 200 parts by weight, preferably 5 to 150 parts by weight, and more preferably 10 to 100 parts by weight. At less than 1 part by weight, the elastic modulus of the cured product becomes low; at more than 200 parts by weight, the adhesive force decreases.

### (E) Photopolymerization Initiator

Specific examples of photopolymerization initiators that may be used in this invention include 2,2-diethoxyacetophenone, 2,2-dimethoxy-1,2-diphenylethan-1-one (Irgacure 651, from BASF), 1-hydroxycyclohexyl phenyl ketone (Irgacure 184, from BASF), 2-hydroxy-2-methyl-1-phenylpropan-1-one (Irgacure 1173, from BASF), 2-hydroxy-1-{4-[4-(2-hydroxy-2-methylpropionyl)benzyl]phenyl}-2-methylpropan-1-one (Irgacure 127, from BASF), phenyl glyoxylic acid methyl ester (Irgacure MBF, from BASF), 2-methyl-1-[4-(methylthio)phenyl]-2-morpholinopropan-1-one (Irgacure 907, from BASF), 2-benzyl-2-dimethylamino-1-(4-morpholinophenyl)-1-butanone (Irgacure 369, from BASF), phenylbis(2,4,6-trimethylbenzoyl)phosphine oxide (Irgacure 819, from BASF) and diphenyl(2,4,6-trimethylbenzoyl)phosphine oxide (Irgacure TPO, from BASF). These may be used singly or two or more may be used in combination.

Of these, from the standpoint of compatibility with component (A), 2,2-diethoxyacetophenone, 2-hydroxy-2-methyl-1-phenylpropan-1-one (Irgacure 1173, from BASF), phenylbis(2,4,6-trimethylbenzoyl)phosphine oxide (Irgacure 819, from BASF) and diphenyl(2,4,6-trimethylbenzoyl)phosphine oxide (Irgacure TPO, from BASF) are preferred.

The photopolymerization initiator is added within an amount in the range of 0.01 to 20 parts by weight per 100 parts by weight of component (A). At less than 0.01 part by weight, the curability is inadequate; at more than 20 parts by weight, the deep curability worsens.

### (F) Finely Powdered Silica

The finely powdered silica of component (F) is an optional ingredient which primarily imparts thixotropic properties to the composition. Examples include fumed silica (dry silica) and precipitated silica (wet silica), although fumed silica (dry silica) is preferred. Including component (F) further increases the hardness of the cured product and also has a misalignment-suppressing effect when transferring components or the like.

Component (F) has a specific surface area which, although not particularly limited, is preferably from 50 to 400 m²/g, and more preferably from 100 to 350 m²/g. At a specific surface area below 50 m²/g, the thixotropic properties of the composition may be inadequate; at more than 400 m²/g, the viscosity of the composition may rise excessively and the workability may worsen. The specific surface area is a value measured by the BET method.

This finely powdered silica of component (F) may be of one type used alone, or two or more types may be used in combination.

These finely powdered silicas may be used directly as is, or a finely powdered silica that has been treated with a surface hydrophobizing treatment agent may be used.

In this case, a finely powdered silica treated beforehand with a surface treatment agent may be used, or a surface treatment agent may be added during kneading of the finely powdered silica, with kneading and surface treatment being carried out at the same time.

These surface treatment agents are exemplified by alkylalkoxysilanes, alkylchlorosilanes, alkylsilazanes and silane coupling agents. One such type may be used alone, or two or more may be used at the same time or under differing timing.

In the inventive composition, when component (F) is used, the amount of addition thereof per 100 parts by weight of component (A) is preferably in the range of 1 to 200 parts by weight, more preferably 5 to 150 parts by weight, and even more preferably 10 to 100 parts by weight.

In addition, additives such as colorants (pigments or dyes), silane coupling agents, tackifiers, polymerization inhibitors, antioxidants, ultraviolet absorbers that are light-resistant stabilizers, and light stabilizers may be included in the inventive composition within ranges which do not detract from the advantageous effects of the invention.

The inventive composition may be suitably mixed with another resin composition and used.

The ultraviolet-curable silicone pressure-sensitive adhesive composition of the invention can be obtained by mixing together in any order above components (A) to (E) and, optionally, component (F) and other ingredients, and stirring, etc.. The apparatus used for operations such as stirring is not particularly limited. For example, an automated mortar, three-roll mill, ball mill, planetary mill or the like may be used. These apparatuses may also be suitably combined.

From the standpoint of shape retention and workability during coating, the ultraviolet-curable silicone pressure-sensitive adhesive composition of the invention has a viscosity, as measured at 23°C using a rotational viscometer, which is preferably not more than 5,000 Pa s, more preferably not more than 3,000 Pa s, and even more preferably not more than 1,500 Pa s. At more than 5,000 Pa s, the workability may markedly worsen.

The ultraviolet-curable silicone pressure-sensitive adhesive composition rapidly cures under ultraviolet irradiation.

Exemplary sources of the ultraviolet light that is irradiated in this case include UV LED lamps, high-pressure mercury-vapor lamps, ultrahigh-pressure mercury-vapor lamps, metal halide lamps, carbon arc lamps and xenon lamps.

The amount of ultraviolet irradiation (cumulative exposure dose) with respect to, for example, a sheet of the inventive composition formed to a thickness of about 2.0 mm, is preferably from 1 to 10,000 mJ/cm², and more preferably from 10 to 8,000 mJ/cm². That is, when ultraviolet light at an illuminance of 100 mW/cm² is used, the ultraviolet light may be irradiated for a period of from about 0.01 second to about 100 seconds.

In this invention, the adhesive force of the cured product obtained by ultraviolet irradiation is not particularly limited. However, taking into account the balance between releasability and retention of the objects to be transferred, the adhesive force is preferably from 0.01 to 100 MPa, and more preferably form 0.02 to 50 MPa.

In order to keep misalignment from arising during the transfer of devices and other microcomponents, the cured product obtained from the ultraviolet-curable silicone pressure-sensitive adhesive composition of the invention has a storage modulus at 25°C and a frequency of 1 Hz that is preferably from 3 to 100 MPa, and more preferably from 5 to 50 MPa.

The ultraviolet-curable silicone pressure-sensitive adhesive composition of the invention can be used as an adhesive article by coating it onto various substrates and ultraviolet curing.

Plastic film, glass, metal and the like may be used without particular limitation as the substrate.

Examples of plastic films include polyethylene film, polypropylene film, polyester film, polyimide film, polyvinyl chloride film, polyvinylidene chloride film, polyvinyl alcohol film, polycarbonate film, polystyrene film, ethylene-vinyl acetate copolymer film, ethylene-vinyl alcohol copolymer film and triacetyl cellulose film.

In the case of glass, there are no particular limitations with respect to the thickness, type and other attributes of the glass. The glass may even be one that has been subjected to, for example, chemical strengthening treatment.

To increase adherence between the substrate and the pressure-sensitive adhesive layer, a substrate that has been subjected beforehand to primer treatment, plasma treatment or the like may be used.

A known coating method, such as a spin coater, comma coater, lip coater, roll coater, die coater, knife coater, blade coater, rod coater, kiss coater, gravure coater, screen coating, dip coating or cast coating, may be suitably selected and used as the coating method.

The ultraviolet-curable silicone pressure-sensitive adhesive composition of the invention is a non-solvent composition, and so potting with the use of a mold is also possible as the method employed to fabricate the cured product.

Bubbles are sometimes entrained when the composition is poured into the mold, but degassing under reduced pressure is possible. A resist mold obtained by using a photoresist to provide the desired topography on a silicon wafer may be used as the mold.

In cases where it is desired to remove the cured product from the mold following the cure, a method that treats the vessel before the composition is poured in with a mold release agent is preferred. The mold release agent may be one that is, for example, fluorocarbon-based or silicone-based.

The ultraviolet-curable silicone pressure-sensitive adhesive composition of the invention is generally used directly as is. However, when improvements in handleability, coatability onto a substrate and the like are required, it is also acceptable to use the composition after diluting it with an organic solvent, within a range that does not detract from the advantageous effects of the invention.

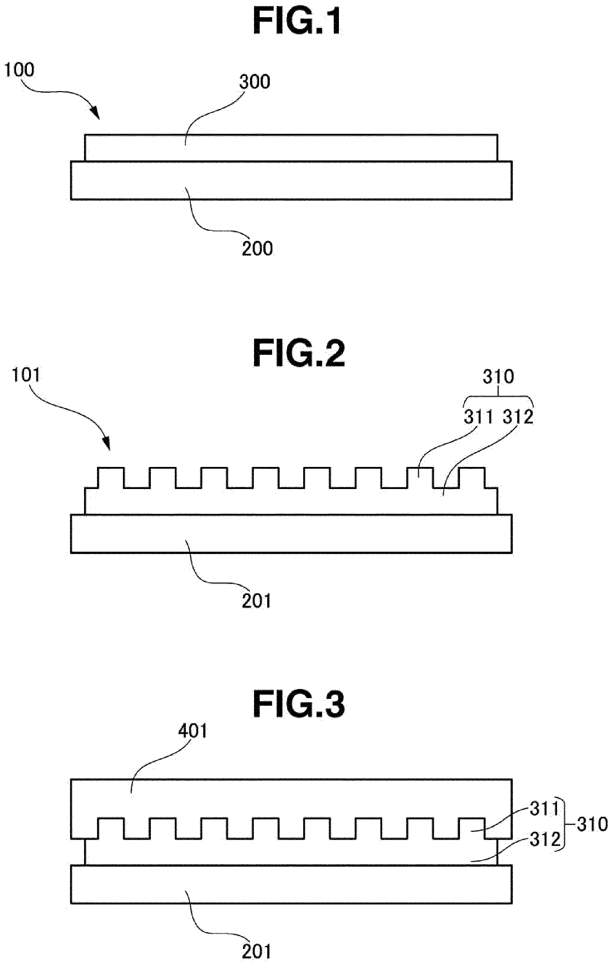

As shown in FIGS. 1 and 2, the cured product of the ultraviolet-curable silicone pressure-sensitive adhesive composition of the invention can be utilized as a microstructure transfer stamp 100 or 101 for transferring very small devices, components and the like.

In FIG. 1, a microstructure transfer stamp 100 is made up of a substrate 200 having thereon a layer 300 of the cured product of the inventive ultraviolet-curable silicone pressure-sensitive adhesive composition. The layer 300 of cured product may be of a size which fits within the substrate 200 or may be exactly the same size as the substrate 200.

The material making up the substrate 200 is not particularly limited. Specific examples include plastic film, glass, synthetic quartz and metal. The thickness and type are also not particularly limited, and the substrate may be chemically strengthened or otherwise treated. Also, to increase adherence between the substrate and the pressure-sensitive adhesive layer, the substrate may be subjected beforehand to primer treatment, plasma treatment or the like. To hold down misalignment during microstructure transfer and increase transfer accuracy, the use of synthetic quartz having a high degree of flatness is preferred.

The method of producing the cured product 300 on the substrate 200 is not particularly limited. For example, the method may be either one that involves directly coating the uncured ultraviolet-curable silicone pressure-sensitive adhesive composition onto the substrate 200 and then curing, or one that involves laminating a sheet-like cured product of the ultraviolet-curable silicone pressure-sensitive adhesive composition onto the substrate 200.

In a method that involves directly coating the ultraviolet-curable silicone pressure-sensitive adhesive composition onto the substrate 200 and curing, a microstructure transfer stamp 100 can be obtained by coating the silicone pressure-sensitive adhesive composition onto the substrate 200 and then curing the composition via ultraviolet irradiation.

A known coating method, such as a spin coater, comma coater, lip coater, roll coater, die coater, knife coater, blade coater, rod coater, kiss coater, gravure coater, screen coating, dip coating or cast coating, may be suitably selected and used as the coating method.

Also, in these methods, after the silicone pressure-sensitive adhesive composition has been coated onto the substrate, curing is effected by ultraviolet irradiation while carrying out press molding, compression molding or the like, thereby enabling a microstructure transfer stamp 100 having a high flatness to be obtained.

In the method of laminating a sheet-like cured product of the ultraviolet-curable silicone pressure-sensitive adhesive composition onto the substrate 200, a microstructure transfer stamp 100 can be obtained by forming the material into a sheet and then laminating it onto the substrate 200.

A forming method such as roll forming, press molding, transfer molding or compression molding may be suitably selected and used as the method of forming the ultraviolet-curable silicone pressure-sensitive adhesive composition into a sheet. The sheet-like cured product is preferably formed while sandwiched between plastic films so as to prevent the adherence of dust and the like and for oxygen inhibition/suppression during curing. In cases where the resulting sheet-like cured product is larger than desired, it may be cut to the desired size.

To increase adherence between the sheet-like cured product and the substrate 200, the lamination surfaces of either or both of these may be subjected to, for example, plasma treatment, excimer treatment or chemical treatment. In addition, a pressure-sensitive adhesive or other type of adhesive may be used to enhance the lamination strength. Examples of adhesives that may be used include silicone-based adhesives, acrylic adhesives and epoxy adhesives.

The lamination method used may be, for example, roll lamination or vacuum pressing.

From the standpoint of formability and flatness, the layer 300 of cured silicone pressure-sensitive adhesive in the microstructure transfer stamp 100 has a thickness of preferably from 1 µm to 1 cm, and more preferably from 10 µm to 5 mm.

The microstructure transfer stamp 101 shown in FIG. 2 is made up of a substrate 201 having thereon a layer 310 of a cured product of the inventive ultraviolet-curable silicone pressure-sensitive adhesive composition. The substrate 201 used here may be similar to the above-described substrate 200. The layer 310 of cured silicone pressure-sensitive adhesive has raised structures 311 on the surface. A base layer 312 may be provided at the foot of the raised structures 311.

The method of fabricating the layer 310 of cured product on the substrate 201 is not particularly limited. Examples include directly forming a layer 310 of the cured product on the substrate 201 by molding or the like, and laminating a sheet-like cured product having raised structures 311 onto the substrate 201.

In the method that involves directly forming a layer 310 of the cured product of the silicone pressure-sensitive adhesive on a substrate 201 by molding, as shown in FIG. 3, a microstructure transfer stamp 101 can be obtained by filling the silicone pressure-sensitive adhesive composition of the invention between the substrate 201 and a mold 401, curing the composition by ultraviolet irradiation, and then removing the mold 401.

The mold 401 that is used may be, for example, a resist mold obtained by using a photoresist to provide the desired topography on a silicon wafer or quartz substrate, or a resin mold having a topography obtained by patterned exposure of an ultraviolet-curable resin. In the case of a resin mold, various types of plastic films may be used as the substrate.

The method of filling the silicone pressure-sensitive composition between the substrate 201 and the mold 401 is exemplified by the method of coating the silicone pressure-sensitive adhesive composition onto either or both the substrate 201 and the mold 401, and then laminating. The above-described methods may be used as the coating method and the laminating method. These is a possibility of tiny bubbles remaining in the mold 401 during coating, but this can be resolved by vacuum lamination or by degassing under reduced pressure.

After coating the silicone pressure-sensitive adhesive composition onto the substrate using these methods, the microstructure transfer stamp 101 can be obtained by curing under ultraviolet irradiation while carrying out press forming, compression molding, roll press forming or the like.

Alternatively, another method that may be used to obtain the microstructure transfer stamp 101 involves screen-printing the silicone pressure-sensitive adhesive composition using a mesh having the desired pattern, and subsequently curing by ultraviolet irradiation. At this time, because the silicone pressure-sensitive adhesive composition of the invention has an excellent shape retention, no loss of the desired pattern shape occurs after coating and up until curing.

In the method of laminating a silicone pressure-sensitive adhesive sheet-like cured product having raised structures 311 onto the substrate 201, the microstructure transfer stamp 101 can be obtained by molding the silicone pressure-sensitive adhesive composition into a sheet-like cured product having raised structures 311 and then laminating the sheet-like cured product onto the substrate 201.

The method of molding the ultraviolet-curable silicone pressure-sensitive adhesive composition into a sheet-like cured product having raised structures 311 may be suitably selected and used from among forming methods such as roll forming, press forming, transfer molding and compression molding that use a mold having a topography similar to the above-described mold 401.

The sheet-like cured product is preferably formed while sandwiched between plastic films so as to prevent the adherence of dust and the like and to inhibit and suppress oxygen during curing. In cases where the sheet-like cured product thus obtained is larger than desired, it may be cut to the desired size.

To increase adherence between the sheet-like cured product and the substrate 200, plasma treatment, excimer treatment, chemical treatment or the like may be applied to the lamination surfaces thereof. In addition, the various pressure-sensitive adhesives and other types of adhesives mentioned above may be used to enhance the lamination strength.

The lamination method used may be, for example, roll lamination or vacuum pressing.

The size and array of the raised structures 311 may be designed in accordance with the size and desired arrangement of the microstructures to be transferred.

The top faces of the raised structures 311 are flat and the surface shape is exemplified by, without limitation, circular, elliptical and rectangular shapes. In the case of, for example, a rectangular shape, rounding of the edges is not a problem. The top faces of the raised structures 311 have a width of preferably from 0.1 µm to 1 cm, and more preferably from 1 µm to 1 mm.

Nor are there any limitations on the sidewall morphology of the raised structures 311, which may be, for example, vertical faces or inclined faces.

The raised structures 311 have a height which is preferably from 0.1 µm to 1 cm, and more preferably from 1 µm to 1 mm.

The pitch distance across the space between neighboring raised structures 311 is preferably from 0.1 µm to 10 cm, and more preferably from 1 µm to 1 mm.

The base layer 312 has a thickness which is preferably from 0.1 µm to 1 cm, and more preferably from 1 µm to 5 mm.

A microstructure transfer stamp like the above can be mounted on an apparatus and thus utilized as a microstructure transfer apparatus. Methods for mounting the microstructure transfer stamp on an apparatus include, but are not limited to, a vacuum chuck and a pressure-sensitive adhesive sheet. The microstructure transfer apparatus, by picking up microstructures such as devices via the adhesive properties of the microstructure transfer stamp, moving the microstructures to desired positions and then releasing them, is able to achieve transfer of the microstructures.

For example, the microstructure transfer stamps 100 and 101 shown in FIGS. 1 and 2 can each be used as a microstructure holding substrate (donor substrate) for temporarily bonding, during a laser lift off (LLO) process that uses laser light to separate a sapphire substrate for a semiconductor device from a GaN compound crystal layer, the separated semiconductor device so as to keep misalignment of the device from occurring. By carrying out laser irradiation in a state where the microstructure holding substrate adheres to the semiconductor device, the separated semiconductor device transfers and is temporarily fixed to the microstructure holding substrate.

In addition, by using a microstructure transfer stamp 100 or 101 having a larger adhesive force than this microstructure holding substrate, the semiconductor device that was temporarily bonded to the microstructure holding substrate can be selectively picked up. Here, by moving the picked-up semiconductor device to a desired position on a mounting substrate, subsequently joining together the semiconductor device and the mounting substrate by soldering, and then releasing the microstructure transfer stamp from the semiconductor device, transfer of the semiconductor device and mounting on a substrate are achieved.

### EXAMPLES

Examples and Comparative Examples are given below to more concretely illustrate the invention, although the invention is not limited by these Examples.

The compounds serving as the ingredients used in the Examples were as follows. Here, "Me" stands for a methyl group and "Vi" stands for a vinyl group.

### Component (A):

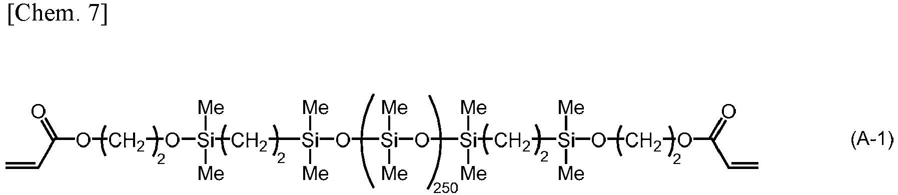

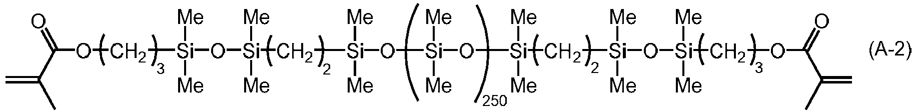

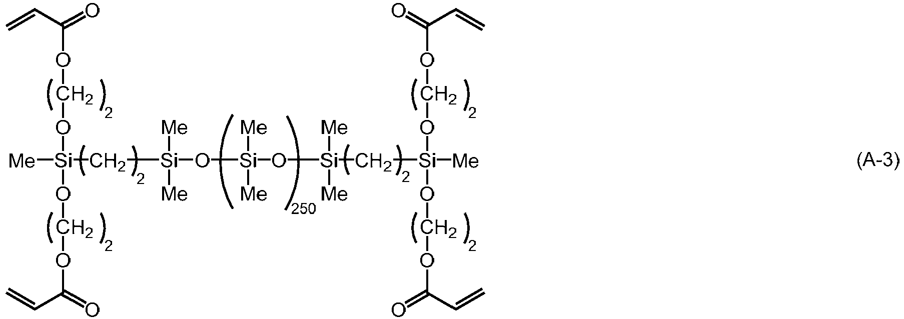

### Component (B):

### (B-1) Isobornyl acrylate (Light Acrylate IB-XA, from Kyoeisha Chemical Co., Ltd.)

### Component (C):

(C-1) 60 wt% toluene solution of organopolysiloxane resin (number-average molecular weight, 3,500) containing Me₃SiO_{1/2} units and SiO₂ units in a molar ratio, expressed as (Me₃SiO_{1/2} units/(SiO₂ units), of 0.85

### Component (D)

(D-1) 50 wt% xylene solution of organopolysiloxane resin (number-average molecular weight, 5,700) containing methacryloyloxy group-containing units of the following formula, ViMe₂SiO_{1/2} units, Me₃SiO_{1/2} units and SiO₂ units in a molar ratio, expressed as methacryloyloxy group-containing units/(ViMe₂SiO_{1/2} units)/(Me₃SiO_{1/2} units)/(SiO₂ units), of 0.07/0.10/0.67/1.00

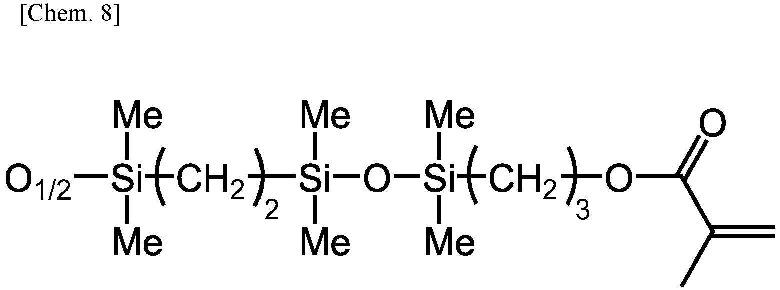

### Component (E)

(E-1) 2-Hydroxy-2-methyl-1-phenylpropan-1-one (Irgacure 1173, from BASF Japan Component (F)
(F-1) Dry silica (Reolosil DM-30S, from Tokuyama Corporation; specific surface area, 230 m²g)

### Examples 1 to 5 and Comparative Examples 1 and 2

The respective silicone compositions shown in Table 1 were prepared by mixing together Components (A) to (F) in the proportions shown in Table 1, and then distilling off the toluene at 100°C under reduced pressure. The viscosities of the compositions in Table 1 are values measured at 23°C using a rotational viscometer.

The silicone composition was cured in a nitrogen atmosphere and at room temperature (25°C) by irradiation with 365 nm wavelength ultraviolet light to an exposure dose of 4,000 mJ/cm² using the Eye UV Electronic Controller (model UBX0601-01) from Eye Graphics Co., Ltd. The hardness of the cured product was measured in accordance with Society of Rubber Industry Standard (SRIS) 0101. The storage modulus of the cured product was measured at a frequency of 1 Hz and 25°C with the Rheogel-E4000 from UBM.

The adhesion of the cured product was measured with the EZ-SX small desktop tester from Shimadzu Corporation. Specifically, this was the value obtained by measuring the load when a 1 mm square SUS stainless steel probe was pressed at 1 MPa for 15 seconds against cured product having a thickness of 1 mm and then pulled away at a velocity of 200 mm/min.

**Table 1**

| | | Example | | | | | Comparative Example | |
|---|---|---|---|---|---|---|---|---|
| | | 1 | 2 | 3 | 4 | 5 | 1 | 2 |
| Formulation (pbw) | A-1 | 100 | | | | | | |
| | A-2 | | 100 | | | | | |
| | A-3 | | | 100 | 100 | 100 | 100 | 100 |
| | B-1 | 15 | 15 | 15 | 30 | 15 | | 150 |
| | C-1 | 140 | 140 | 140 | 100 | 140 | 125 | 250 |
| | D-1 | 30 | 30 | 30 | 20 | 30 | | |
| | E-1 | 3 | 3 | 3 | 3 | 3 | 3 | 3 |
| | F-1 | | | | | 15 | | |
| Composition properties | Viscosity (Pa·s) | 30 | 30 | 33 | 5 | 160 | 120 | 0.9 |
| Properties of cured product | Hardness (Type A) | 21 | 23 | 30 | 43 | 40 | 15 | 92 |
| | Storage modulus (MPa) | 6.2 | 6.5 | 15 | 18 | 18 | 0.9 | 300 |
| | Adhesive force (MPa) | 2.1 | 2.0 | 2.6 | 2.0 | 2.5 | 0.8 | <0.01 |

As shown in Table 1, the ultraviolet-curable silicone pressure-sensitive adhesive compositions prepared in Examples 1 to 5 had suitable viscosities. Also, their cured products had an excellent adhesion and an excellent storage modulus, from which it is apparent that they are useful as temporary fixing materials for transferring devices and other microscale components.

On the other hand, in Comparative Example 1 which did not include component B-1 and component D-1, the storage modulus was low, and so it is apparent that the positional accuracy during transfer was not great. Also, in Comparative Example 2, which did not include component D-1 and in which the storage modulus was elevated by increasing the amount of component B-1, because the cured product ended up being resinous and did not exhibit an adhesive force, this was clearly unsuitable as a temporary bonding material.

### REFERENCE SIGNS LIST

- 100, 101:: Microstructure transfer stamp
- 200, 201:: Substrate
- 300, 310:: Cured product layer
- 311:: Raised structure
- 312:: Base layer
- 401:: Mold

## Claims

1. An ultraviolet-curable silicone pressure-sensitive adhesive composition comprising:
(A) 100 parts by weight of organopolysiloxane having per molecule two groups of general formula (1): 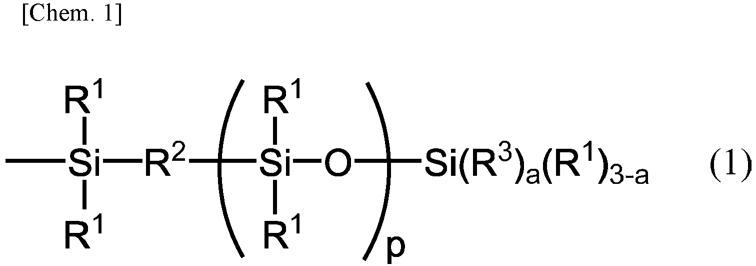 (wherein each R¹ independently is a monovalent hydrocarbon group of 1 to 20 carbon atoms; R² is an oxygen atom or alkylene group of 1 to 20 carbon atoms; each R³ independently is an acryloyloxyalkyl, methacryloyloxyalkyl, acryloyloxyalkyloxy or methacryloyloxyalkyloxy group; p is a number that satisfies the condition 0 ≤ p ≤ 10 and a is a number that satisfies the condition 1 ≤ a ≤ 3),
(B) from 1 to 200 parts by weight of monofunctional (meth)acrylate compound having no siloxane structure,
(C) from 1 to 1,000 parts by weight of organopolysiloxane resin consisting of (a) R⁴₃SiO_{1/2} units (wherein each R⁴ independently is a monovalent hydrocarbon group of 1 to 10 carbon atoms) and (b) SiO_{4/2} units, in a molar ratio of (a) units to (b) units in the range 0.4:1 to 1.2:1,
(D) from 1 to 200 parts by weight of organopolysiloxane resin consisting of (c) units of general formula (2) below 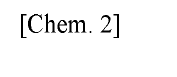 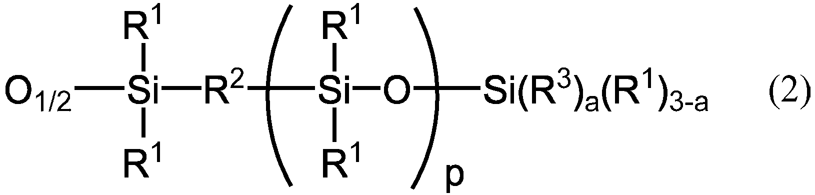 (wherein R¹, R², R³, a and p are as defined above), (d) R⁴₃SiO_{1/2} units (wherein R⁴ is as defined above) and (e) SiO_{4/2} units, in a molar ratio of (c) units and (d) units combined to (e) units in the range 0.4:1 to 1.2:1, and
(E) from 0.01 to 20 parts by weight of photopolymerization initiator.

2. An ultraviolet-curable silicone pressure-sensitive adhesive composition of claim 1, further comprising (F) from 1 to 200 parts by weight of finely powdered silica per 100 parts by weight of component (A).

3. A cured product of an ultraviolet-curable silicone pressure-sensitive adhesive composition of claim 1 or 2.

4. A cured product of claim 3 which has a storage modulus, at 25°C and a frequency of 1 Hz, which is at least 3 MPa.

5. A pressure-sensitive adhesive comprising a cured product of claim 3 or 4.

6. An adhesive sheet comprising a cured product of claim 4.

7. A microstructure transfer stamp comprising a cured product of claim 4.

8. A microstructure transfer stamp of claim 7 which has at least one raised structure.

9. Microstructure transfer apparatus comprising a microstructure transfer stamp of claim 7 or 8.

10. A microstructure-holding substrate comprising a pressure-sensitive adhesive layer made of a cured product of claim 4.

11. A microstructure transfer apparatus comprising a microstructure-holding substrate of claim 10.

## Patentansprüche

1. UV-härtbare druckempfindliche Silikonklebstoff-Zusammensetzung, die Folgendes umfasst:
(A) 100 Gewichtsteile Organopolysiloxan, das pro Molekül zwei Gruppen der allgemeinen Formel (1) aufweist:
[Chem. 1] 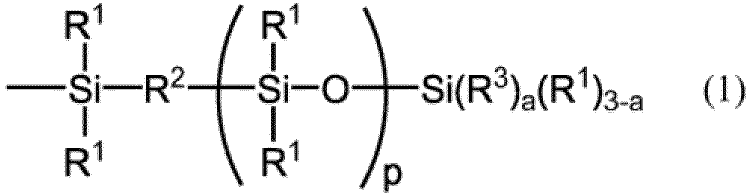 (worin die R¹ jeweils unabhängig eine einwertige Kohlenwasserstoffgruppe mit 1 bis 20 Kohlenstoffatomen sind; R² ein Sauerstoffatom oder eine Alkylengruppe mit 1 bis 20 Kohlenstoffatomen ist; die R³ jeweils unabhängig eine Acryloyloxyalkyl-, Methacryloyloxyalkyl-, Acryloyloxyalkyloxy- oder Methacryloyloxyalkoyloxy-Gruppe ist; p eine Zahl ist, die die Bedingung 0 ≤ p ≤ 10 erfüllt, und a eine Zahl ist, die die Bedingung 1 ≤ a ≤ 3 erfüllt),
(B) 1 bis 200 Gewichtsteile einer monofunktionellen (Meth)acrylat-Verbindung ohne Siloxanstruktur,
(C) 1 bis 1000 Gewichtsteile eines Organopolysiloxan-Harzes, das aus (a) R⁴₃SiO_{1/2}-Einheiten (worin die R⁴ jeweils unabhängig eine einwertige Kohlenwasserstoffgruppe mit 1 bis 10 Kohlenstoffatomen sind) und (b) SiO_{4/2}-Einheiten in einem Molverhältnis der Einheiten (a) zu den Einheiten (b) im Bereich von 0,4:1 bis 1,2:1 besteht,
(D) 1 bis 200 Gewichtsteile eines Organopolysiloxan-Harzes, das aus (c) Einheiten der nachstehenden allgemeinen Formel (2)
[Chem. 2] 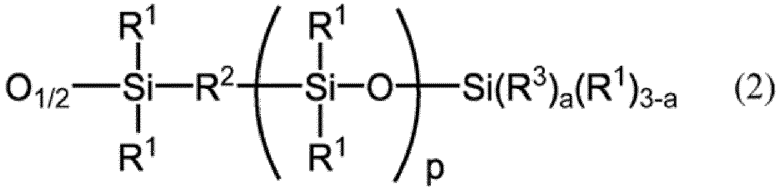 (worin R¹, R², R³, a und p wie oben definiert sind), (d) R⁴₃SiO_{1/2}-Einheiten (worin R⁴ wie oben definiert ist) und (e) SiO_{4/2}-Einheiten in einem Molverhältnis der Einheiten (c) zu den Einheiten (d) in Kombination mit den Einheiten (e) im Bereich von 0,4:1 bis 1,2:1 besteht, und
(E) 0,01 bis 20 Gewichtsteile eines Photopolymerisationsinitiators.

2. UV-härtbare druckempfindliche Silikonklebstoff-Zusammensetzung nach Anspruch 1, die weiters (F) 1 bis 200 Gewichtsteile von feinpulvrigem Siliciumdioxid pro 100 Gewichtsteile von Komponente (A) umfasst.

3. Gehärtetes Produkt einer UV-härtbaren druckempfindlichen Silikonklebstoff-Zusammensetzung nach Anspruch 1 oder 2.

4. Gehärtetes Produkt nach Anspruch 3, das einen Lagermodul bei 25 °C und einer Frequenz von 1 Hz aufweist, der zumindest 3 MPa beträgt.

5. Druckempfindlicher Klebstoff, der ein gehärtetes Produkt nach Anspruch 3 oder 4 umfasst.

6. Klebefolie, die ein gehärtetes Produkt nach Anspruch 4 umfasst.

7. Mikrostruktur-Transferstempel, der ein gehärtetes Produkt nach Anspruch 4 umfasst.

8. Mikrostruktur-Transferstempel nach Anspruch 7, der zumindest eine erhabene Struktur aufweist.

9. Mikrostruktur-Transfervorrichtung, die einen Mikrostruktur-Transferstempel nach Anspruch 7 oder 8 umfasst.

10. Mikrostruktur-Haltesubstrat, das eine druckempfindliche Klebstoffschicht umfasst, die aus einem gehärteten Produkt nach Anspruch 4 besteht.

11. Mikrostruktur-Transfervorrichtung, die ein Mikrostruktur-Haltesubstrat nach Anspruch 10 umfasst.

## Revendications

1. Composition d'adhésif sensible à la pression de silicone durcissable aux ultraviolets, comprenant :
(A) 100 parties en poids d'organopolysiloxane ayant, par molécule, deux groupes de la formule générale (1) :
[Chem. 1] 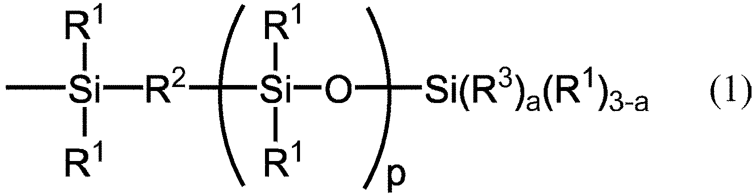 (où chaque R¹ est indépendamment un groupe hydrocarboné monovalent de 1 à 20 atomes de carbone ; R² est un atome d'oxygène ou un groupe alkylène de 1 à 20 atomes de carbone ; chaque R³ est indépendamment un groupe acryloyloxyalkyle, méthacryloyloxyalkyle, acryloyloxyalkyloxy ou méthacryloyloxyalkyloxy ; p est un nombre qui satisfait la condition 0 ≤ p ≤ 10 et a est un nombre qui satisfait la condition 1 ≤ a ≤ 3),
(B) de 1 à 200 parties en poids d'un composé de (méth)acrylate monofonctionnel ne contenant pas de structure de siloxane,
(C) de 1 à 1 000 parties en poids de résine d'organopolysiloxane constituée (a) d'unités R⁴₃SiO_{1/2} (où chaque R⁴ est indépendamment un groupe hydrocarboné monovalent de 1 à 10 atomes de carbone) et (b) d'unités SiO_{4/2}, selon un rapport molaire d'unités (a) à unités (b) compris entre 0,4:1 et 1,2:1,
(D) de 1 à 200 parties en poids de résine d'organopolysiloxane constituée d'unités (c) de formule générale (2) ci-dessous
[Chem. 2] 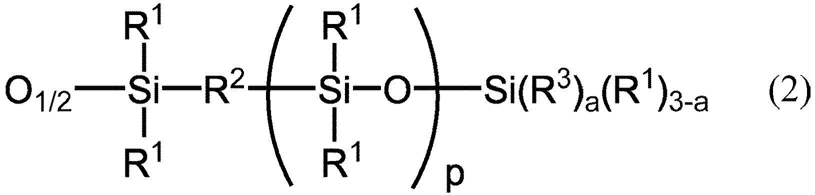 (où R¹, R², R³, a et p sont tels que définis ci-dessus), (d) d'unités R⁴₃SiO_{1/2} (où R⁴ est tel que défini ci-dessus) et (e) d'unités SiO_{4/2}, selon un rapport molaire d'unités (c) et d'unités (d) combinées aux unités (e) compris entre 0,4:1 et 1,2:1, et
(E) de 0,01 à 20 parties en poids d'initiateur de photopolymérisation.

2. Composition d'adhésif sensible à la pression de silicone durcissable aux ultraviolet selon la revendication 1, comprenant en outre (F) de 1 à 200 parties en poids de silice en poudre fine pour 100 parties en poids du composant (A) .

3. Produit durci d'une composition d'adhésif sensible à la pression de silicone durcissable aux ultraviolet selon l'une quelconque des revendications 1 ou 2.

4. Produit durci selon la revendication 3, qui présente un module de stockage, à 25°C et à une fréquence de 1 Hz, qui est d'au moins 3 MPa.

5. Adhésif sensible à la pression comprenant un produit durci de la revendication 3 ou 4.

6. Feuille adhésive comprenant un produit durci de la revendication 4.

7. Tampon de transfert de microstructure comprenant un produit durci de la revendication 4.

8. Tampon de transfert de microstructure selon la revendication 7, qui présente au moins une structure surélevée.

9. Appareil de transfert de microstructure comprenant un tampon de transfert de microstructure selon la revendication 7 ou 8.

10. Substrat de maintien de microstructure comprenant une couche d'adhésif sensible à la pression réalisée en un produit durci de la revendication 4.

11. Appareil de transfert de microstructure comprenant un substrat de maintien de microstructure selon la revendication 10.
